# EUROPEAN PATENT APPLICATION

(11) **EP 4 156 494 A1**
(43) Date of publication of application: **29.03.2023**
(21) Application number: 22195086.8
(22) Date of filing: 12.09.2022
(51) Int. Cl.: H02P 3/04, H02P 3/26, F16D 59/02

(54) **METHOD AND APPARATUS FOR DIAGNOSTIC TESTING OF A SAFE BRAKE CONTROL CIRCUIT**

(30) Priority: 23.09.2021 US 202117483237
(71) Applicant: Rockwell Automation Technologies, Inc., Mayfield Heights, OH 44124-6188 (US)
(72) Inventor: Ganesan, Nandini, Mequon (US); Ortell, Mark T., Mequon (US); Desotelle, Sawyer J., Eden Prairie (US)
(74) Representative: Grünecker Patent- und Rechtsanwälte PartG mbB

(57) **Abstract**

A method and system for monitoring operation of a brake control circuit periodically verifies that redundant output control channels transition between ON and OFF states. A controller generates separate brake release signals for each of the redundant output control channels. The brake release signals are combined to form a brake command signal used to control operation of the brake coil. An input channel on the controller receives a signal corresponding to the current state of the brake command signal to monitor brake operation. The controller periodically modulates the brake release signals on each channel between an ON and an OFF state. The modulation is observed on the brake command signal to verify that each output channel is able to change state. The modulation occurs at a frequency greater than a response frequency of the brake coil such that the brake coil remains energized during modulation of each output channel.

## Description

### BACKGROUND INFORMATION

The subject matter disclosed herein relates to a diagnostic test for a safe brake circuit on a motor. More specifically, modulated signals are output on each channel of a brake control circuit with redundant intermediate stages during operation of the brake, where different signals are output at different times on each channel of the intermediate stages to verify proper operation of the safe brake circuit.

Electrical rotating machines, such as electric motors or generators, have become widespread and are found in numerous applications and configurations. Electric machines include a stationary component (i.e., the stator) and a rotating component (i.e., the rotor). In electric motors, a magnetic field is established in the rotor, for example via magnets mounted to the rotor or via an electrical current applied to or induced in a coil wound on the rotor. A second, rotating magnetic field is established as a result of a stator current produced by a controlled voltage applied to the stator. Rotation of the magnetic field in the stator causes the magnetic field in the rotor to follow the stator field, thereby causing rotation of the rotor. A shaft or other drive member is mounted to the rotor and extends outside the rotor housing providing a mechanical coupling to a device, such as a gearbox, pump, or fan that is to be driven as the rotor rotates. The amplitude and frequency of the controlled voltage applied to the stator is varied to achieve desired operation of the motor.

As is known to those skilled in the art, motor controllers, also referred to herein as motor drives, are utilized to vary the amplitude and frequency of the voltage applied to a motor to achieve desired operation of the motor. A motor controller is configured to receive power at an input, where the input power may be supplied from either an alternating current (AC) source or a direct current (DC) source. If the input power is supplied from an AC source, a rectifier section converts the AC power to DC power. The DC bus, either from the output of the rectifier section or supplied directly from the DC source is provided to a DC bus within the motor controller. A current regulator and modulation techniques are used to control an inverter section which, in turn, supplies the required current and voltage to the motor from the DC bus to achieve desired operation of the motor.

It is often desirable that the motor is prevented from rotating when the motor drive is not commanded to cause rotation of the motor. A holding brake may be provided which engages a rotating member of the drive train. The holding brake may be configured to engage an output shaft of the motor or, alternately, engage another rotating member connected to the output shaft via a coupling, gear box, or the like. The holding brake is normally closed, meaning when the brake is not energized, a spring mechanism will cause the holding brake to engage the rotating member to prevent rotation. When the brake is energized, a coil within the holding brake actuates the brake member to compress the spring and disengage a brake pad, brake shoe, or the like from the rotating member to allow rotation.

In some applications, there may be a requirement of human interaction with the machine or process controlled by the motor, and, as a result, there may be a requirement to control the brake according to predefined safety levels, such as Safety Integrity Levels (SIL) set forth in industrial standards prepared by the International Electrotechnical Commission (IEC). Each safety level indicates with a differing degree of certainty that the system will operate as intended. Considered from a different perspective, each safety integrity level defines a probability of a dangerous failure occurring within an hour. As safety levels increase, the probability of the dangerous failure occurring decreases. For example, at a rating level of SIL 1, the system has a probability of a dangerous failure occurring in a range between 10⁻⁵ and 10⁻⁶. At a rating level of SIL 2, the system has a probability of a dangerous failure occurring in a range between 10⁻⁶ and 10⁻⁷. For each increase in safety integrity level, the probability of a dangerous failure occurring is reduced by an order of magnitude over the prior level.

Obtaining a desired safety level may be accomplished, in part, by using a safety monitoring system to ensure with a high degree of certainty that the safety function will perform as intended. The safety monitoring system may employ redundant inputs and outputs. Each of the redundant input signals may be compared to each other to detect the failure of a single input. The safety monitoring system may further connect output signals back to monitoring input signals, such that the input corresponding to the state of each output signal is compared to commanded output signal verify correct operation of an output terminal.

When considering the holding brake application discussed above, it is known to include redundant intermediate stages to control a pair of output signals to a brake coil. Each of the output signals may be provided back to a monitoring input signal, and the monitoring input signal can be compared to the corresponding output signal to verify that each output channel is generating the desired output signal. However, redundant output signals and monitoring the present state of an output signal may not achieve a desired safety factor. In some applications, a still greater safety factor may be required.

Thus, it would be desirable to provide an improved system for monitoring operation of a brake control circuit to achieve an increased safety factor.

### BRIEF DESCRIPTION

According to one embodiment of the invention, a method for monitoring operation of a brake control circuit includes generating a first brake release signal and a second brake release signal within a controller for the brake control circuit, outputting the first brake release signal on a first output channel for the brake control circuit, and outputting the second brake release signal on a second output channel for the brake control circuit. A motor brake is released when both the first and second output channels are outputting the first and second brake release signals, respectively. A first diagnostic signal is generated on the first output channel while the motor brake is released, and the first output channel is monitored to detect the first diagnostic signal. A second diagnostic signal is generated on the second output channel while the motor brake is released, and the second output channel is monitored to detect the second diagnostic signal. Proper operation of the brake control circuit is verified when both the first and second diagnostic signals are detected while the motor brake is released.

According to another embodiment of the invention, a system for monitoring operation of a brake control circuit includes a first output channel, a second output channel, an input channel, and a controller. The first output channel on the brake control circuit is configured to output a first brake release signal and a first diagnostic signal, and the second output channel on the brake control circuit is configured to output a second brake release signal and a second diagnostic signal. The input channel is configured to monitor the first and second diagnostic signals. The controller is configured to generate the first brake release signal and the second brake release signal to release a holding brake, periodically generate the first diagnostic signal while the holding brake is released, periodically generate the second diagnostic signal while the holding brake is released, and receive the first and second diagnostic signals from the input channel to verify proper operation of the brake control circuit.

According to still another embodiment of the invention, a method for monitoring operation of a brake control circuit includes controlling operation of a motor brake with redundant output channels, generating a first diagnostic signal on a first output channel of the redundant output channels while the motor brake is released, and generating a second diagnostic signal on a second output channel of the redundant output channels while the motor brake is released. The first output channel is monitored to detect the first diagnostic signal, and the second output channel is monitored to detect the second diagnostic signal. Proper operation of the brake control circuit is verified when both the first and second diagnostic signals are detected while the motor brake is released.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a perspective view of an exemplary industrial control application incorporating the present invention;
FIG. 2 is a partial block diagram representation of the exemplary industrial control application of Fig. 1
FIG. 3 is a schematic representation of a smart brake circuit according to one embodiment of the invention;
FIG. 4 is a graphical representation of a first set of test signals for each channel of the smart brake circuit of Fig. 3; and
FIG. 5 is a graphical representation of a second set of test signals for each channel of the smart brake circuit of Fig. 3.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

The subject matter disclosed herein describes an improved system for monitoring operation of a brake control circuit. In addition to providing redundancy and monitoring the present operating state of a brake, an increased safety factor may be achieved by also periodically verifying that each output terminal is able to transition between states. A brake control circuit for a motor brake includes redundant output channels. A controller for the brake control circuit generates separate brake release signals for each output channel. The brake release signals are combined to form a brake command signal used to control operation of the brake coil. When both brake release signals are output in tandem, the brake command signal is in an ON state and the brake coil is energized, causing the brake to release. An input channel receives a signal corresponding to the current state of the command signal being provided to the brake coil such that the controller is able to verify proper operation of the brake when the brake release signals are being generated.

The controller is further configured to periodically test operation of each output channel to verify that the output channel is able to change state. The brake release signal output on the first output channel is modulated between an ON and an OFF state. Because the command signal is generated as a function of the brake release signals of both channels, the modulation on the first output channel appears on the brake command signal. However, the modulation occurs at a frequency greater than a response frequency of the brake coil. As a result, the brake coil remains energized while the modulation is present on the brake command signal. After modulating the brake release signal on the first output channel, the brake release signal output on the second output channel is then modulated between the ON and OFF states. The modulation on the second output channel likewise appears on the brake command signal. The modulation on the second output channel is also selected at a frequency greater than the response frequency of the brake coil. As previously indicated, the brake command signal is provided as an input signal being fed back to the controller and being monitored by the controller. Thus, the controller may monitor the brake command signal to verify that the modulation commanded on each output channel is present on the brake command signal and, as a result, verify that each output channel is able to change state. By using a modulation frequency on each output channel greater than the response frequency of the brake coil, the controller is able to test operation of each output channel during operation of the brake without interrupting operation of the brake and, as a result, without interrupting operation of the motor.

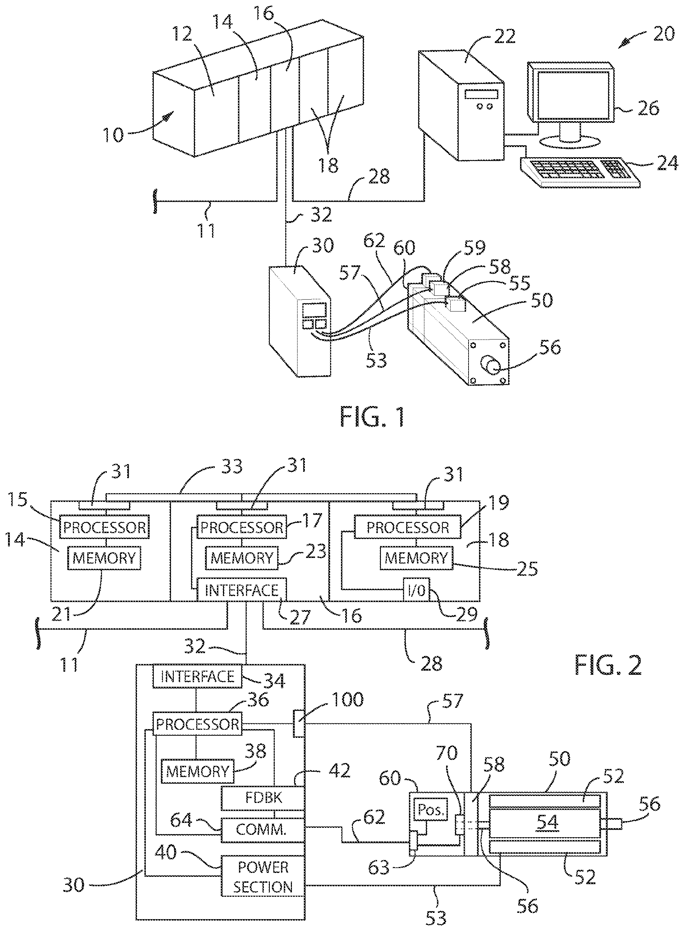

Turning initially to Fig. 1, an exemplary industrial control system includes an industrial controller 10 in communication with a motor drive 30 and a remote processing device 20. As illustrated, the industrial controller 10 is modular and may be made up of numerous different modules connected together in a rack or mounted to a rail. Additional modules may be added or existing modules removed and the industrial controller 10 reconfigured to accommodate the new configuration. Optionally, the industrial controller 10 may have a predetermined and fixed configuration. In the illustrated embodiment, the industrial controller 10 includes a power supply module 12, a processor module 14, a network module 16, and two additional modules 18 that may be selected according to the application requirements and may be, for example, analog or digital input or output modules.

One or more remote processing devices 20 may be connected to the industrial control network. The remote processing device may be an operator interface located proximate to the industrial controller, a desktop computer located at a separate facility from the industrial controller, or a combination thereof. The remote processing device 20 may include a processing unit 22, input device 24, including, but not limited to, a keyboard, touchpad, mouse, trackball, or touch screen, and a display device 26. It is contemplated that each component of the remote processing device may be incorporated into a single unit, such as an industrial computer, laptop, or tablet computer. It is further contemplated that multiple display devices 26 and/or multiple input devices 24 may be distributed about the controlled machine or process and connected to one or more processing units 22. The remote processing device 20 may be used to display operating parameters and/or conditions of the controlled machine or process, receive commands from the operator, or change and/or load a control program or configuration parameters. An interface cable 28 connects the remote processing device 20 to the industrial controller 10.

The industrial controller 10 is connected to other devices by one or more networks according to the application requirements. As illustrated, interface cables 28, 32 connect the industrial controller 10 to the remote processing device 20 and the motor drive 30, respectively. It is contemplated that the interfaces cables 28, 32 may be a custom cable configured to communicate via a proprietary interface or may be any standard industrial network cable, including, but not limited to, EtherNet/IP, DeviceNet, or ControlNet. The network module 16 is configured to communicate according to the protocol of the network to which it is connected and may be further configured to translate messages between two different network protocols. An additional network cable 11 may be a standard Ethernet cable connected to a network external from the industrial network, such as the Internet or an intranet.

The industrial control network further includes a motor drive 30 and a motor 50. The motor drive 30 is connected to the industrial controller 10 via a network cable 32. As illustrated, the motor drive 30 is connected to a network module 16 to receive communications from the industrial controller 10. The communications may include configuration packets or operating commands generated by the processor module 14. Optionally, the industrial controller 10 may include another module (not shown) dedicated to communicating with the motor drive 30. The additional module may be, for example, a servo module, which is configured to generate motion profiles, velocity profiles, or other command profiles and transmit the commands to the motor drive 30.

The motor drive 30 receives the commands, which indicate a desired operation of the motor 50, and generates a variable frequency and variable amplitude voltage for the motor to achieve the desired operation. A power cable 53 extends between the motor drive 30 and a junction box 55 on the motor to supply the variable frequency and variable amplitude voltage to the motor. A communication cable 62 extends between a first communication interface 64 (see also Fig. 2) in the motor drive 30 and a second communication interface in 63 the motor 50. An encoder 60 is mounted to the rear of the motor 50 and generates a position feedback signal corresponding to an angular position of the motor 50. The position feedback signal may be provided directly to the motor drive via a dedicated position feedback cable (not shown) or, optionally, the position feedback signal may be transmitted via the communication cable 62 to the motor drive 30. The position feedback signal may be transmitted directly or after some initial processing, such as inserting the position information into a data packet for serial communications or converting the position signal to a velocity signal, is performed within the encoder 60 prior to sending the feedback signal to the motor drive 30. Optionally, the communication interface within the motor 50 may be integrated within the encoder 60. The position feedback information and additional data provided from a circuit within the motor 50 to the encoder 60 may be combined into a data packet by the encoder 60 for transmission to the motor drive 30.

The illustrated embodiment further includes a brake module 58 mounted between the motor 50 and the encoder 60. As shown in Fig. 2, a shaft 56 extending from the rotor 54 of the motor 50 passes through the brake module 58. It is contemplated that the brake module 58 may be a drum-style brake system, with brake shoes mounted to the drive shaft 56. The brake shoes engage and disengage a brake drum to prevent and to allow rotation of the motor 50. Alternately, the brake module 58 may be a disc-style brake system. A rotating disc may be mounted on the shaft 56 extending from the rotor 54. Calipers cause brake pads to engage and disengage the rotating disc to prevent and allow rotation of the motor. Still other configurations of brake systems may be utilized without deviating from the scope of the invention. The brake module 58 typically includes a spring element, hydraulic element, pneumatic element, or some other compressible element exerting a biasing force on the brake shoe, brake pad, or the like to engage the rotating member A coil in the brake module 58 is energized causing an actuator to retract the brake shoe or brake pad from the rotating member further compressing the spring, hydraulic or pneumatic cylinder, or other compressible element thereby allowing rotation of the motor. When the coil in the brake module 58 is deenergized, the compressible element exerts the biasing force on the brake shoe or brake pad, causing the brake shoe or pad to reengage the rotating member and to stop rotation of the motor 50.

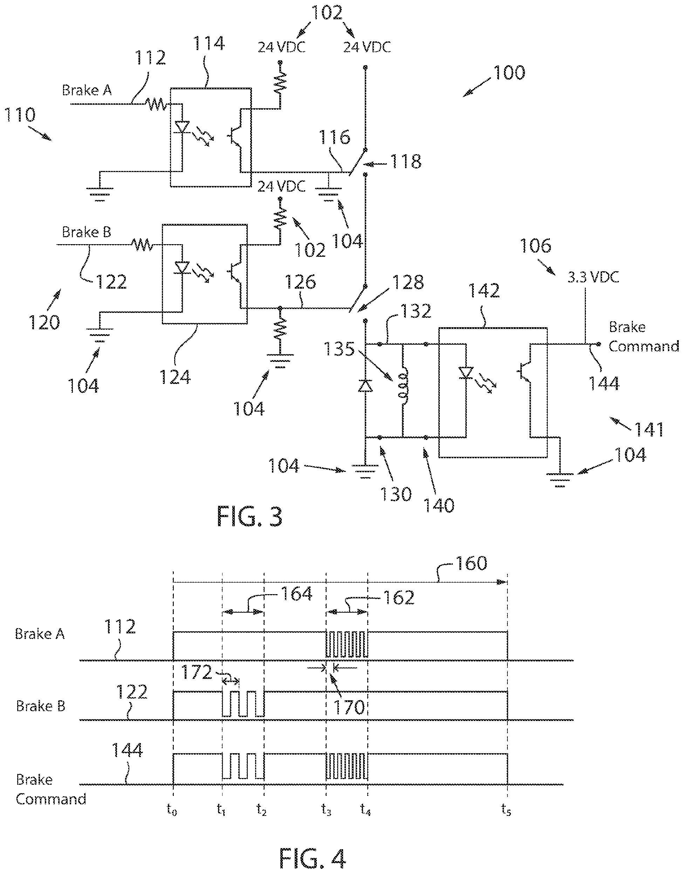

With reference also to Fig. 3, a brake control circuit 100 is provided to control operation of the brake module 58. The brake control circuit 100 includes a first internal channel 110 for a first brake release signal 112 and a second internal channel 120 for a second brake release signal 122. Intermediate stages are provided between each brake release signal 112, 122 and an output signal 132 to control operation of the brake. The first brake release signal 112 is provided to an optocoupler device 114. The optocoupler device 114 receives a first control voltage 102, such as the illustrated twenty-four volts (24 VDC) and the brake release signal 112 as inputs. A first optocoupler output signal 116, corresponding to the first brake release signal 112, is electrically isolated from the control circuit which generated the first brake release signal 112. The first optocoupler output signal 116 is used to control a first switch 118. It is contemplated that the first switch 118 may be a transistor, relay, or any other suitable switching device. The second brake release signal 122 is provided to an optocoupler device 124. The optocoupler device 124 receives the first control voltage 102, such as the illustrated twenty-four volts (24 VDC) and the second brake release signal 122 as inputs. A second optocoupler output signal 126, corresponding to the second brake release signal 122 is electrically isolated from the control circuit which generated the second brake release signal 122. The second optocoupler output signal 126 is used to control a second switch 128. It is contemplated that the second switch 128 may be a transistor, relay, or any other suitable switching device.

The first optocoupler output signal 116 and the second optocoupler output signal 126 are used to control operation of the brake coil 135. According to the illustrated embodiment, the first control voltage 102 is provided to a first pole of the first switch 118. When the first optocoupler output signal 116 is in an ON state, the first switch 118 closes, connecting the first control voltage through the switch to the second pole of the first switch 118. The second pole of the first switch 118 is connected in series with the first pole of the second switch 128. Thus, when the first optocoupler output signal 116, an optically isolated first brake release signal, is ON, the second switch 128 receives the 24 VDC control voltage at its first pole. When the second optocoupler output signal 126 is in an ON state, the second switch 128 closes, connecting the 24 VDC control voltage through the switch to the second pole of the second switch 128. Thus, when the second optocoupler output signal 126, an optically isolated second brake release signal, along with the first optocoupler output signal 116 are both in the ON state, the 24 VDC control voltage is provided as an output 132 to the brake coil 135 to energize the brake coil and open the brake 58. The output 132 corresponds to a combination of the states of the first brake release signal 112 and the second brake release signal 122 and is referred to herein as a brake command signal 132.

With reference still on Fig, 3, a feedback signal corresponding to the brake command signal 132 is provided as an input. An input channel 141 includes an optocoupler device 142 receiving a second control voltage 106, such as the illustrated three and three-tenths volts (3.3 VDC), and the brake command signal 132 as inputs. An output from the optocoupler device 142, corresponding to the brake command signal 132 is electrically isolated from the brake coil 135. The output from the optocoupler device 142 is used as an input signal 144 corresponding to the brake command signal 132

According to one aspect of the invention, the brake control circuit 100 is included in the motor drive 30. In many applications, the motor drive 30 controls operation of the brake 58. The first switch 118 and second switch 128 are transistors included within the motor drive and a single output 130 is configured to provide the brake command signal 132 to the brake coil 135. The brake command signal 132 is output via a first pair of terminals 130, where a first terminal is the output signal and a second terminal is a common terminal providing a return conduction path to the motor drive 30. The motor drive 30 also includes a second pair of terminals 140, which serve as an input to the motor drive 30. A first terminal is the input signal terminal, monitoring the state of the brake command signal 132 and the second terminal is connected to a common terminal 104 to provide the return conduction path. The isolated brake command signal 144 is provided to the processor 36 in the motor drive 30 to verify correct operation of the brake command signal 132.

According to another aspect of the invention, the brake control circuit 100 may be provided within the industrial controller 10. In some applications, it may be desirable for the industrial controller 10 to control operation of the brake, and a control program executing in the processor module 14 is configured to coordinate generation of the brake release signals 112, 122 with providing a run command and/or a motion profile to the motor drive 30. It is contemplated that the first and second brake release signals 116, 126 after electrical isolation may be provided at output terminals of an output module 18. The first and second switches 118, 128 may be implemented via relays within a control cabinet or mounted proximate the brake 58 and the motor 50. The optocoupler output signals 116, 126 control operation of the switches 118, 128 to generate the brake command signal 132. Alternately, the first and second switches 118, 128 may be implemented internal to the industrial controller 10 in a manner similar to that discussed above with respect to the motor drive. According to still another option, the switches 118, 128 may be implemented as instructions within the control program executing on the processor module 14 or as transistors within the output module 18. A single output of the output module 18 may correspond to the brake command signal 132. In either aspect of the invention, the brake command signal 132 is utilized to control operation of the brake coil 135. An input of an input module 18 may be configured to receive the brake command signal 132 and the isolated brake command signal 144 is provide to the control program executing on the processor module 14 to verify correct operation of the brake command signal 132.

Referring next to Fig. 2, a portion of the exemplary industrial control system shown in Fig. 1 is illustrated in block diagram form. Each of the modules 14, 16, 18 in the industrial controller 10 may include a processing device and memory. The functionality and size of the processing device and memory may vary according to the requirements of each module. As illustrated, each module 14, 16, 18 includes a processor 15, 17, 19 configured to execute instructions and to access or store operating data and/or configuration parameters stored in the corresponding memory device 21, 23, 25. The processors 15, 17, 19 may be any suitable processor according to the module requirements. It is contemplated that processors 15, 17, 19 may include a single processing device or multiple processing devices executing in parallel and may be implemented in separate electronic devices or incorporated on a single electronic device, such as a microprocessor, a field programmable gate array (FPGA) or application specific integrated circuit (ASIC). Similarly, the memory devices 21, 23, 25 may be a single device, multiple devices or may be incorporated in part or in whole within the FPGA or ASIC.

The modules may further include additional logic and/or control circuits according to the module requirements. Each I/O module 18, for example, includes input and/or output terminals and the associated circuitry 29 to connect the I/O module to an external device. The network module 16 includes a network interface 27 configured to receive data packets from the network media connected to the interface. According to the illustrated embodiment, the network interface 27 is connected to an external network via Ethernet cable 11 as well as the motor drive 30 and remote processing device 20 via the respective network cables 32, 28. The network module 16 may be configured to function as a gateway between networks and to convert data packets between protocols.

The motor drive 30 also includes a processing device and memory. As illustrated, the motor drive 30 includes a processor 36 configured to execute instructions and to access or store operating data and/or configuration parameters stored in the corresponding memory device 38. The processor 36 may be any suitable processor according to the module requirements. It is contemplated that processor 36 may include a single processing device or multiple processing devices executing in parallel and may be implemented in separate electronic devices or incorporated on a single electronic device, such as a microprocessor, a field programmable gate array (FPGA) or application specific integrated circuit (ASIC). Similarly, the memory devices 38 may be a single device, multiple devices or may be incorporated in part or in whole within the FPGA or ASIC. The motor drive 30 also includes a network interface 34 to communicate with the industrial controller 10 and/or other devices via the industrial network. A feedback circuit 42 is in communication with the communication interface 64 and receives position feedback information from the encoder 60 which is transmitted via the communication cable 62. The motor drive also includes a power section 40, where the power section 40 is configured to receive either AC or DC power from an external source and convert the external power to the variable frequency and variable amplitude voltage supplied to the motor. The variable frequency and variable amplitude voltage is provided to a stator 52 of the motor 50 which causes the rotor 54 and, in turn, the drive shaft 56 of the motor to rotate.

The drive shaft 56 may be a single shaft extending through the rotor 54 and protruding from one end or both ends based on the configuration of the motor 50. Optionally, the drive shaft 56 may include a first shaft portion extending from the front of the motor 50 and a second shaft portion extending toward the rear of the motor 50. According to still another embodiment, the drive shaft 56 may include a first shaft portion extending from the front of the motor 50, a second shaft portion 56 extending internally toward the rear of the motor, and a third shaft portion 71 coupled to the second shaft portion 56. The second shaft portion is sized appropriately to be coupled to a disc within the brake 58 and the third shaft portion is sized to extend through the encoder 60. In any of the configurations described above, the drive shaft 56 or portions of the drive shaft rotate responsive to the variable frequency and variable amplitude voltage provided to the stator 52. The portion of the drive shaft 56 extending from the front of the motor 50 may be coupled to and control operation of a machine, gearbox, or the like that is mechanically coupled to the drive shaft 56. The portion of the drive shaft 56 extending toward the rear of the motor 50 may be coupled to the motor brake 58 as discussed above. The illustrated embodiment is intended to be exemplary and will be used herein for discussion purposes. It is understood that the drive shaft 56 may extend from just one side of the rotor 54 and be of sufficient length such that the motor brake may be coupled to the same portion of the drive shaft 56 extending from the motor and coupled to a machine, gearbox, or the like. Further, the diameter of the drive shaft 56 may be uniform throughout its length or be varied according to the requirements of the device coupled to the drive shaft 56.

In operation, the brake control circuit 100 is used to control operation of the brake 58. Whether the brake control circuit 100 is included in the motor drive 30 or in the industrial controller 10, a command signal is generated indicating desired operation of the motor 50. For ease of description, the motor drive 30 and the industrial controller 10 will be referred to herein as the controller for the brake control circuit 100. It is understood that the controller for the brake control circuit 100 could refer to either the motor drive 30 or to the industrial controller 10 according to the configuration of the system in which the invention is incorporated. The command signal is typically generated as a result of instructions executing in a control program on the processor module 14. The command signal may be a desired torque to be produced by the motor, a desired speed at which the motor is to run, or a desired angular position of the motor. The command signal may undergo initial processing within the industrial controller 10 to generate a motion profile for the motor 50 to follow. Optionally, the command signal may be transmitted directly to the motor drive 30. The motor drive 30 receives the command signal or motion profile and generates a desired output voltage for the motor 50 to obtain the commanded operation. When the motor 50 is commanded to rotate, the brake 58 must be released to allow rotation. The controller for the brake control circuit 100 generates the first brake release signal 112 and the second brake release signal 122 and provides the brake release signals to the brake control circuit 100. Upon receiving both brake release signals 112, 122, the brake control circuit 100 closes the first switch 118 and the second switch 128, generating the brake command signal 132. The brake command signal 132 is provided as an output from the brake control circuit 100 to energize the brake coil 135 in the brake 58, releasing the brake. When the desired operation of the motor 50 is complete, the command signal from the control program indicates the brake is to be set. The first brake release signal 112 and the second brake release signal 122 are both set to a logical OFF state. The brake control circuit 100, in turn, opens the first switch 118 and the second switch 128, removing the brake command signal 132. Removal of the brake command signal deenergizes the brake coil 135 and sets the brake 58, preventing rotation of the motor 50 when it is not commanded to operate.

The redundant brake channels 110, 120 prevent a single failure of one of the switches 118, 128 from potentially causing unsafe rotation of the motor 50. If, for example, one of the switches 118, 128 fails in a state resulting in a short circuit, or continuous ON state, of the switch, that switch is unable to deenergize the brake coil 135. If only a single switch were used, the single switch, in the above-described failed condition, would always have the brake coil 135 energized, even if, for example, the motor drive 30 commanded the motor 50 to stop and ceased controlling operation of the motor 50. An unintentionally energized brake coil 135 could allow the motor brake 58 to remain open, and an overhauling force, generated by a load present on the motor 50, could cause unintended motion of the motor 50 and the load present on the motor. Because there are two switches 118, 128, even if a single switch failed in the ON state, the second switch is still able to open, removing the brake command signal 132, causing the brake coil 135 to deenergize, and setting the brake 58.

During operation of the brake 58, the brake command monitoring signal 144 allows the controller for the brake control circuit 100 to monitor that the desired brake command signal 132 is being provided to the brake 58. The controller for the brake control circuit 100 has knowledge of the first brake release signal 112 and the second brake release signal 122. After allowing for a short activation time for the first switch 118 and the second switch 128 to close and for the brake coil 135 to energize, the brake command monitoring signal 144 should be ON when both the first brake release signal 112 and the second brake release signal 122 are ON. If either of the first brake release signal 112 or the second brake release signal 122 are OFF, the brake command monitoring signal 144 should be OFF. If both the first brake release signal 112 and the second brake release signal 122 are ON and either the first switch 118 or the second switch 128 fails to close, the brake command signal 132 and, consequently, the brake command monitoring signal 144 will be OFF. Thus, the controller for the brake control circuit 100 may compare the value of the brake command monitoring signal 144 to the first and second brake release signals 112, 122 to verify that both the first switch 118 and the second switch 128 have opened when commanded.

It is an aspect of the invention that the brake control circuit 100, in combination with the brake command input signal 144 are used to provide an increased safety level for controlling operation of the brake 58. In addition to the redundant brake release signals 112, 122 and monitoring the brake command signal 132, the brake control circuit 100 and brake command input signal 144 are used to verify that the first switch 118 and the second switch 128 are able to transition between an open and a closed state. The controller for the brake control circuit 100 is configured to generate diagnostic signals to verify that the switches 118, 128 are able to change state.

Turning next to Fig. 4, exemplary brake release signals 112, 122 and a resulting brake command signal 144 are illustrated during verification of the switch operation. A first duration 160 corresponds to a desired run time of the motor 50 and extends between a first time, to, and a second time, t₅. During this first duration, the brake 58 needs to be released, allowing the motor 50 to rotate. The first brake release signal 112 and the second brake release signal 122 are each set to an ON state which, in turn, sets the brake command 132 to an ON state. The brake command input signal 144 is similarly in an ON state as it monitors the brake command signal 132 present across the brake coil 135. During a run in which no diagnostic testing is performed, the first brake release signal 112, the second brake release signal 122, and the brake command signal 144 all transition from an OFF state to an ON state when the motor 50 is rotating and back from the ON state to an OFF state when rotation of the motor is complete.

In order to test operation of each switch 118, 128, separate diagnostic signals for each switch are generated by the controller for the brake circuit 100. According to the illustrated embodiment, the first brake release signal 112 is tested during a first duration 162 beginning at time t₃ and ending at time t₄. A first diagnostic signal is generated by the controller during the first duration 162 wherein the first diagnostic signal is a pulse modulated signal having a first frequency, a first duration, and a first number of pulses. The first diagnostic signal is superimposed on the first brake release signal 112 and is illustrated as the series of pulses observed on the first brake release signal 112 within the first duration 162. The second brake release signal 122 is tested during a second duration 164 beginning at time t₁ and ending at time t₂. A second diagnostic signal is generated by the controller during the second duration 164 wherein the second diagnostic signal is a pulse modulated signal having a second frequency, a second duration, and a second number of pulses. The second diagnostic signal is superimposed on the second brake release signal 122 and is illustrated as the series of pulses observed on the second brake release signal 122 within the second duration 164. Because the brake command signal 132 (and consequently the brake command input signal 144) is generated as a function of both the first brake release signal 112 and the second brake release signal 122, both of the diagnostic signals appear also on the brake command signal 132. During the first duration 162, the first diagnostic signal appears on the brake command signal 132, and during the second duration 164, the second diagnostic signal appears on the brake command signal.

The controller for the brake control circuit 100 is configured to generate different diagnostic signals for each brake channel 110, 120 such that operation of each channel may be verified independently. According to the illustrated embodiment, the first diagnostic signal has a first period 170 which is shorter than a second period 172 of the second diagnostic signal. In other words, the frequency of the first diagnostic signal is greater than the frequency of the second diagnostic signal. Each of the first and second diagnostic signals are illustrated having a duration of approximately equal length. The first diagnostic signal has six pulses during the first duration 162, and the second diagnostic signal has three pulses during the second duration 164. Optionally, the first and second diagnostic signals may have an identical frequency and different duration. According to still another option, both the frequency and the duration of each diagnostic signal may be different. Because both diagnostic signals are monitored on a single input via the brake command input signal 144, having different diagnostic signals allows the controller for the brake control circuit 100 to verify that the correct diagnostic signal is present on the brake command input signal 144 at the expected time.

To verify operation of the switches 118, 128 in the brake control circuit 100, the controller generates each diagnostic signal at a different time while the brake is commanded to be open. Within the first duration 162, the controller generates the first diagnostic signal and monitors the brake command input signal 144 to verify that the same signal is present on the input signal 144. When the same diagnostic signal is present on the brake command input signal 144 as the first diagnostic signal being superimposed on the first brake release signal 112, the controller verifies that the first switch 118 is able to transition between an open and a closed operating state. Within the second duration 164, the controller generates the second diagnostic signal and monitors the brake command input signal 144 to verify that the same signal is present on the input signal 144. When the same diagnostic signal is present on the brake command input signal 144 as the second diagnostic signal being superimposed on the second brake release signal 122, the controller verifies that the second switch 128 is able to transition between an open and a closed operating state.

In some applications, a motor 50 may be commanded to run continuously for an extended period of time without setting the brake 58. This may occur, for example, on a process line, web handling process, or the like. Without periodically generating the diagnostic signals, a failure in one of the switches 118, 128 such that the switch is unable to transition from the ON state to the the OFF state would not be detectable until a controller shuts down, which may only occur for periodic maintenance. If both switches 118, 128 were to fail such they were stuck in the ON state, the brake command signal 132 would remain on and the brake coil 135 remain energized even if the motor drive 30 brought the motor 50 to a stop and ceased control of the motor. Therefore, it is desirable to alert a technician if one of the switches 118, 128 fails such that it is stuck in the ON state before the second switch fails.

Each of the diagnostic signals are selected such that the frequency at which the pulse signal is generated is greater than a response time for the brake coil 135 in the brake 58. The brake coil 135 acts as an inductor in the system. Current flowing through an inductor (e.g., the brake coil 135) will tend to stay flowing without a substantial change in voltage. As the size of the inductor increases, the tendency to resist changes in current flow increases. Removal of the voltage from across the inductor will require some time for the current to stop flowing through the coil 135 and the parallel diodes. It is contemplated that the duration of time required for a brake coil 135 to respond to the voltage being removed is in the range of ten milliseconds to one hundred milliseconds (10-100 ms). It is desirable that the frequency of the modulation on the diagnostic signal be about an order of magnitude, or ten times, greater than the response rate for the brake coil 135. As a result, a maximum duration of the period 170, 172 for either diagnostic signal may be about one millisecond (1 ms), which is about one kilohertz (1 kHz). The frequency of the diagnostic signal may be in the tens or hundreds of kilohertz depending on the type of switch selected for the first switch 118 and the second switch 128. When motor operation is desired, both the first switch 118 and the second switch 128 are set to a logical ON state for a sufficient duration for the brake coil 135 to energize and the brake 58 to fully release. Once the brake coil 135 is energized, the controller for the brake control circuit 100 may periodically generate the first and second diagnostic signals. The modulation on the diagnostic signals allows the switches to open and close at a sufficient rate that the brake coil 135 is unable to respond within the short duration for which the switch being tested is in the OFF state. The brake coil 135 remains energized while the diagnostic signal is superimposed on the corresponding brake release signal. Thus, the controller for the brake control circuit 100 is able to monitor operation of each switch 118, 128 without interrupting operation of the motor 50.

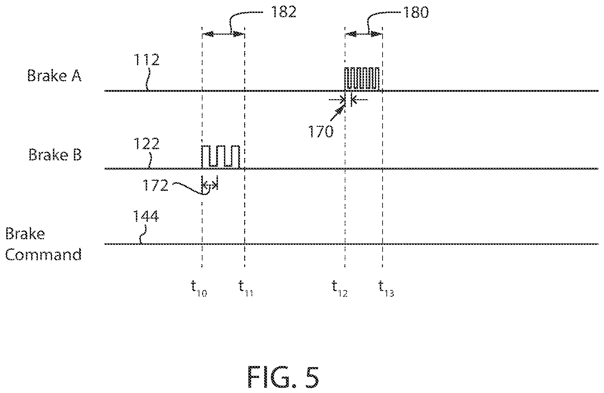

Turning next to Fig. 5, it is further contemplated that the modulation signals may also be utilized to detect the failure of one of the switches 118, 128 when the motor brake is not being commanded to operate. As discussed above, the brake command 132 output to the brake coil 135 and, in turn, the brake command monitoring signal 144 should only be on when both brake release signals 112, 122 are active. During a period of time in which the motor 50 is not being commanded to run, both brake release signals 112, 122 are in a logical OFF state and the holding brake 58 is set. The brake command signal 144 is likewise in a logical OFF state.

During this duration in which the motor 50 is not being commanded to run, the diagnostic pulses, as previously discussed, may be output on the first brake release signal 112 and on the second brake release signal 122. The separate diagnostic signals for each switch 118, 128 are generated by the controller for the brake circuit 100. According to the illustrated embodiment, the first diagnostic signal is generated by the controller during a first duration 180, beginning at time t₁₂ and ending at time t₁₃, wherein the first diagnostic signal is a pulse modulated signal having a first frequency, a first duration, and a first number of pulses. The first diagnostic signal is superimposed on the first brake release signal 112 and is illustrated as the series of pulses observed on the first brake release signal 112 within the first duration 180. The second diagnostic signal is generated by the controller during a second duration 182, beginning at time t₁₀ and ending at time t₁₁, wherein the second diagnostic signal is a pulse modulated signal having a second frequency, a second duration, and a second number of pulses. The second diagnostic signal is superimposed on the second brake release signal 122 and is illustrated as the series of pulses observed on the second brake release signal 122 within the second duration 182.

Because the brake command signal 132 (and consequently the brake command input signal 144) is generated as a function of both the first brake release signal 112 and the second brake release signal 122, neither of the diagnostic signals should appear on the brake command signal 132 when the brake is commanded to be set. During the first duration 180, the first diagnostic signal is superimposed on the first brake release signal 112 and toggles the first switch 118. However, if the second brake release signal 122 is off and the second switch 128 is open, the first diagnostic signal will not appear on the brake command signal 132. Similarly, during the second duration 182, the second diagnostic signal is superimposed on the second brake release signal 122 and toggles the second switch 128. However, if the first brake release signal 112 is off and the first switch is open 118, the second diagnostic signal will not appear on the brake command signal.

The controller for the brake control circuit 100 is configured to generate different diagnostic signals for each brake channel 110, 120 such that operation of each channel may be verified independently According to the illustrated embodiment, the first diagnostic signal has a first period 170 which is shorter than a second period 172 of the second diagnostic signal. In other words, the frequency of the first diagnostic signal is greater than the frequency of the second diagnostic signal. Each of the first and second diagnostic signals are illustrated having a duration of approximately equal length. The first diagnostic signal has six pulses during the first duration 180, and the second diagnostic signal has three pulses during the second duration 182. Optionally, the first and second diagnostic signals may have an identical frequency and different duration . According to still another option, both the frequency and the duration of each diagnostic signal may be different. Because both diagnostic signals are monitored on a single input via the brake command input signal 144, having different diagnostic signals allows the controller for the brake control circuit 100 to identify which diagnostic signal is present on the brake command input signal 144 in the event one of the switches 118, 128 is stuck in an ON state while the brake is expected to be set.

Similar to the diagnostic check discussed above to verify that the switches 118, 128 are able to change state while the brake is open, the diagnostic check to verify that a switch 118, 128 is not stuck open while the brake is closed relies on the frequency response of the brake coil 135. Under normal operating conditions, one of the switches 118, 128 is always in an open condition and the modulated signal is unable to energize the brake coil 135 by itself. Under a fault condition, one of the switches 118, 128 would be stuck closed or stuck in a logical ON state. However, the modulated diagnostic signals are selected at a frequency above the response rate for the brake coil 135. The modulated signal is output at a frequency which prevents the brake coil 135 from responding. Because the brake coil is de-energized, it remains de-energized even if the switch 118, 128 in one channel 110, 120 is stuck in the ON state while the diagnostic signal is output on the other channel.

To detect one of the switches 118, 128 in the brake control circuit 100 being stuck in the ON state, the controller generates each diagnostic signal at a different time while the brake is commanded to be closed. Within the first duration 180, the controller generates the first diagnostic signal and monitors the brake command input signal 144 to verify that no signal is present on the input signal 144. If the same diagnostic signal is observed on the brake command input signal 144 as the first diagnostic signal being superimposed on the first brake release signal 112, then both switches 118, 128 must be closed. When the brake 58 is commanded to be set, both switches 118, 128 should be open. The controller, therefore, may detect that the second switch 128 is stuck in an open state. Within the second duration 182, the controller generates the second diagnostic signal and monitors the brake command input signal 144 to verify that no signal is present on the input signal 144. If the same diagnostic signal is observed on the brake command input signal 144 as the second diagnostic signal being superimposed on the second brake release signal 122, then both switches 118, 128 must be closed. When the brake is commanded to be set, both switches 118, 128 should be open. The controller, therefore, may detect that the first switch 118 is stuck in an open state.

Such an implementation may be more useful in applications where a motor is run on an intermittent basis rather than in a more continuous operating mode as discussed above. When a new run command for the motor 50 is received at the motor drive 30. The motor drive 30 may generate the first diagnostic signal and the second diagnostic signal prior to commanding the brake to release. If neither diagnostic signal is observed on the brake command input signal 144, the controller has determined that neither switch 118, 128 is stuck in an ON position. The controller may then generate both brake release signals 112, 122 to command the brake to open.

It should be understood that the invention is not limited in its application to the details of construction and arrangements of the components set forth herein. The invention is capable of other embodiments and of being practiced or carried out in various ways Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**The following is a list of further preferred embodiments of the invention:**
Embodiment 1. A method for monitoring operation of a brake control circuit, the method comprising:
   generating a first brake release signal and a second brake release signal within a controller for the brake control circuit;
   outputting the first brake release signal on a first output channel for the brake control circuit;
   outputting the second brake release signal on a second output channel for the brake control circuit;
   releasing a motor brake when both the first and second output channels are outputting the first and second brake release signals, respectively;
   generating a first diagnostic signal on the first output channel while the motor brake is released;
   monitoring the first output channel to detect the first diagnostic signal;
   generating a second diagnostic signal on the second output channel while the motor brake is released;
   monitoring the second output channel to detect the second diagnostic signal; and
   verifying proper operation of the brake control circuit when both the first and second diagnostic signals are detected while the motor brake is released.
Embodiment 2. The method of embodiment 1 further comprising the steps of:
   setting a brake command signal to release the motor brake when both the first and second output channels are outputting the first and second brake release signals, respectively, wherein the brake command signal energizes a coil to release the motor brake; and
   monitoring the brake command signal at the controller.
Embodiment 3. The method of embodiment 2 wherein:
   the first and second diagnostic signals are present on the brake command signal;
   the step of monitoring the first output channel to detect the first diagnostic signal is done by monitoring the brake command signal at the controller; and
   the step of monitoring the second output channel to detect the second diagnostic signal is done by monitoring the brake command signal at the controller.
Embodiment 4. The method of embodiment 3 wherein:
   the first diagnostic signal is a first modulated pulse train superimposed on the first brake release signal; and
   the second diagnostic signal is a second modulated pulse train superimposed on the second brake release signal.
Embodiment 5. The method of embodiment 4 wherein:
   the first modulated pulse train has a first duration and a first frequency;
   the second modulated pulse train has a second duration and a second frequency; and
   either the first duration is different than the second duration or the first frequency is different than the second frequency.
Embodiment 6. The method of embodiment 1, wherein:
   the controller includes a first processing core and a second processing core;
   the first processing core is configured to:
      generate the first brake release signal.
      generate the first diagnostic signal, and
      output the first brake release signal and the first diagnostic signal on the first output channel; and
   the second processing core is configured to:
      generate the second brake release signal.
      generate the second diagnostic signal, and
      output the second brake release signal and the second diagnostic signal on the second output channel.
Embodiment 7. The method of embodiment 1 wherein the controller is a motor drive, the method further comprising the steps of:
   receiving a command signal to start operation of a motor operatively connected to the motor drive; and
   generating the first and second brake release signals within the motor drive responsive to receiving the command signal.
Embodiment 8. The method of embodiment 1 further comprising the steps of:
   controlling a motor with a motor drive, wherein the motor brake is configured to prevent rotation of the motor when set; and
   generating a command signal to start operation of the motor in a controller external from the motor drive, wherein the first brake release signal, the second brake release signal, the first diagnostic signal, and the second diagnostic signal are each generated in the controller external from the motor drive.
Embodiment 9. A system for monitoring operation of a brake control circuit, the system comprising:
   a first output channel on the brake control circuit, wherein the first output channel is configured to output a first brake release signal and a first diagnostic signal;
   a second output channel on the brake control circuit, wherein the second output channel is configured to output a second brake release signal and a second diagnostic signal;
   an input channel configured to monitor the first and second diagnostic signals; and
   a controller configured to:
      generate the first brake release signal and the second brake release signal to release a holding brake;
      periodically generate the first diagnostic signal;
      periodically generate the second diagnostic signal; and
      monitor the input channel to detect the first and second diagnostic signals to verify proper operation of the brake control circuit.
Embodiment 10. The system of embodiment 9 further comprising:
   a first switch operatively controlled by the first brake release signal;
   a second switch operatively controlled by the second brake release signal; and
   a control voltage conducted through the first switch and the second switch to generate a brake command signal, wherein the brake command signal is provided to a coil on the holding brake to release the holding brake and wherein the brake command signal is provided to the input channel.
Embodiment 11. The system of embodiment 10 wherein:
   the controller is further configured to:
   superimpose the first diagnostic signal with the first brake release signal on the first output channel, and
   superimpose the second diagnostic signal with the second brake release signal on the second output channel;
   the first and second diagnostic signals are superimposed on the brake command signal; and
   the brake command signal is monitored to receive the first and second diagnostic signals and to verify proper operation of the brake control circuit.
Embodiment 12. The system of embodiment 9 further comprising:
   a first switch operatively controlled by the first brake release signal;
   a second switch operatively controlled by the second brake release signal; and
   a control voltage conducted through the first switch and the second switch to generate a brake command signal, wherein the brake command signal is provided to the input channel and wherein the input channel is off when the brake command signal is commanded to set the holding brake.
Embodiment 13. The system of embodiment 10 wherein:
   the controller is further configured to:
   output the first diagnostic signal on the first output channel when the first brake release signal is off, and
   output the second diagnostic signal on the second output channel when the second brake release signal is off; and
   the brake command signal is monitored to verify the input channel is off when the controller is outputting the first and second diagnostic signals with the first and second brake release signals off to verify proper operation of the brake control circuit.
Embodiment 14. The system of embodiment 9, wherein:
   the controller further includes a first processing core and a second processing core;
   the first processing core is configured to:
      generate the first brake release signal.
      generate the first diagnostic signal, and
      output the first brake release signal and the first diagnostic signal on the first output channel; and
   the second processing core is configured to:
      generate the second brake release signal.
      generate the second diagnostic signal, and
      output the second brake release signal and the second diagnostic signal on the second output channel.
Embodiment 15. The system of embodiment 9 further comprising:
   a motor drive operatively connected to a motor, wherein:
   the holding brake is configured to prevent rotation of the motor when set,
   the controller is in the motor drive, and
   the controller is further configured to:
      receive a command signal to start operation of the motor, and
      generate the first and second brake release signals within the motor drive responsive to receiving the command signal.
Embodiment 16. The system of embodiment 9 further comprising:
   a motor drive operatively connected to a motor; and
   an additional controller external from the motor drive, wherein:
      the motor drive is configured to control operation of the motor,
      the holding brake is configured to prevent rotation of the motor when set,
      the additional controller is configured to generate a command signal to start operation of the motor and to generate the first brake release signal, the second brake release signal, the first diagnostic signal, and the second diagnostic signal.
Embodiment 17. A method for monitoring operation of a brake control circuit, the method comprising:
   controlling operation of a motor brake with redundant output channels;
   generating a first diagnostic signal on a first output channel of the redundant output channels;
   monitoring the first output channel to detect the first diagnostic signal;
   generating a second diagnostic signal on a second output channel of the redundant output channels;
   monitoring the second output channel to detect the second diagnostic signal;
   verifying proper operation of the brake control circuit when both the first and second diagnostic signals are detected at an input channel while the motor brake is released; and
   verifying proper operation of the brake control circuit when neither the first nor second diagnostic signals are detected at the input channel while the motor brake is set.
Embodiment 18. The method of embodiment 17 further comprising the steps of:
   controlling a first switch with the first output channel; and
   controlling a second switch with the second output channel.
Embodiment 19. The method of embodiment 18 further comprising the steps of:
   setting a brake command signal to release the motor brake when both the first switch and the second switch are in an ON state, wherein the brake command signal energizes a coil to release the motor brake; and
   monitoring the brake command signal at the controller.
Embodiment 20. The method of embodiment 19 wherein:
   the first and second diagnostic signals are present on the brake command signal;
   the step of monitoring the first output channel to detect the first diagnostic signal is done by monitoring the brake command signal at the controller; and
   the step of monitoring the second output channel to detect the second diagnostic signal is done by monitoring the brake command signal at the controller.

## Claims

1. A method for monitoring operation of a brake control circuit, the method comprising:
generating a first brake release signal and a second brake release signal within a controller for the brake control circuit;
outputting the first brake release signal on a first output channel for the brake control circuit;
outputting the second brake release signal on a second output channel for the brake control circuit;
releasing a motor brake when both the first and second output channels are outputting the first and second brake release signals, respectively;
generating a first diagnostic signal on the first output channel while the motor brake is released;
monitoring the first output channel to detect the first diagnostic signal;
generating a second diagnostic signal on the second output channel while the motor brake is released;
monitoring the second output channel to detect the second diagnostic signal; and
verifying proper operation of the brake control circuit when both the first and second diagnostic signals are detected while the motor brake is released.

2. The method of claim 1 further comprising the steps of:
setting a brake command signal to release the motor brake when both the first and second output channels are outputting the first and second brake release signals, respectively, wherein the brake command signal energizes a coil to release the motor brake; and
monitoring the brake command signal at the controller.

3. The method of claim 2 wherein:
the first and second diagnostic signals are present on the brake command signal;
the step of monitoring the first output channel to detect the first diagnostic signal is done by monitoring the brake command signal at the controller;
the step of monitoring the second output channel to detect the second diagnostic signal is done by monitoring the brake command signal at the controller;
the first diagnostic signal is a first modulated pulse train superimposed on the first brake release signal;
the second diagnostic signal is a second modulated pulse train superimposed on the second brake release signal;
the first modulated pulse train has a first duration and a first frequency;
the second modulated pulse train has a second duration and a second frequency; and
either the first duration is different than the second duration or the first frequency is different than the second frequency.

4. The method of claim 1, wherein:
the controller includes a first processing core and a second processing core;
the first processing core is configured to:
generate the first brake release signal.
generate the first diagnostic signal, and
output the first brake release signal and the first diagnostic signal on the first output channel; and
the second processing core is configured to:
generate the second brake release signal.
generate the second diagnostic signal, and
output the second brake release signal and the second diagnostic signal on the second output channel.

5. The method of claim 4 wherein the controller is a motor drive, the method further comprising the steps of:
receiving a command signal to start operation of a motor operatively connected to the motor drive; and
generating the first and second brake release signals within the motor drive responsive to receiving the command signal.

6. The method of claim 1 further comprising the steps of:
controlling a motor with a motor drive, wherein the motor brake is configured to prevent rotation of the motor when set; and
generating a command signal to start operation of the motor in a controller external from the motor drive, wherein the first brake release signal, the second brake release signal, the first diagnostic signal, and the second diagnostic signal are each generated in the controller external from the motor drive.

7. A system for monitoring operation of a brake control circuit, the system comprising:
a first output channel on the brake control circuit, wherein the first output channel is configured to output a first brake release signal and a first diagnostic signal;
a second output channel on the brake control circuit, wherein the second output channel is configured to output a second brake release signal and a second diagnostic signal;
an input channel configured to monitor the first and second diagnostic signals; and
a controller configured to:
generate the first brake release signal and the second brake release signal to release a holding brake;
periodically generate the first diagnostic signal;
periodically generate the second diagnostic signal; and
monitor the input channel to detect the first and second diagnostic signals to verify proper operation of the brake control circuit.

8. The system of claim 7 further comprising:
a first switch operatively controlled by the first brake release signal;
a second switch operatively controlled by the second brake release signal; and
a control voltage conducted through the first switch and the second switch to generate a brake command signal, wherein the brake command signal is provided to a coil on the holding brake to release the holding brake and wherein the brake command signal is provided to the input channel.

9. The system of claim 8 wherein:
the controller is further configured to:
superimpose the first diagnostic signal with the first brake release signal on the first output channel, and
superimpose the second diagnostic signal with the second brake release signal on the second output channel;
the first and second diagnostic signals are superimposed on the brake command signal; and
the brake command signal is monitored to receive the first and second diagnostic signals and to verify proper operation of the brake control circuit.

10. The system of claim 7 further comprising:
a first switch operatively controlled by the first brake release signal;
a second switch operatively controlled by the second brake release signal; and
a control voltage conducted through the first switch and the second switch to generate a brake command signal, wherein the brake command signal is provided to the input channel and wherein the input channel is off when the brake command signal is commanded to set the holding brake.

11. The system of claim 8 wherein:
the controller is further configured to:
output the first diagnostic signal on the first output channel when the first brake release signal is off, and
output the second diagnostic signal on the second output channel when the second brake release signal is off; and
the brake command signal is monitored to verify the input channel is off when the controller is outputting the first and second diagnostic signals with the first and second brake release signals off to verify proper operation of the brake control circuit.

12. The system of claim 7, wherein:
the controller further includes a first processing core and a second processing core;
the first processing core is configured to:
generate the first brake release signal.
generate the first diagnostic signal, and
output the first brake release signal and the first diagnostic signal on the first output channel; and
the second processing core is configured to:
generate the second brake release signal.
generate the second diagnostic signal, and
output the second brake release signal and the second diagnostic signal on the second output channel.

13. The system of claim 7 further comprising:
a motor drive operatively connected to a motor, wherein the holding brake is configured to prevent rotation of the motor when set, the controller is in the motor drive, and the controller is further configured to receive a command signal to start operation of the motor, and generate the first and second brake release signals within the motor drive responsive to receiving the command signal; or
a motor drive operatively connected to a motor, and
an additional controller external from the motor drive, wherein the motor drive is configured to control operation of the motor, the holding brake is configured to prevent rotation of the motor when set, the additional controller is configured to generate a command signal to start operation of the motor and to generate the first brake release signal, the second brake release signal, the first diagnostic signal, and the second diagnostic signal.

14. A method for monitoring operation of a brake control circuit, the method comprising:
controlling operation of a motor brake with redundant output channels;
generating a first diagnostic signal on a first output channel of the redundant output channels;
monitoring the first output channel to detect the first diagnostic signal;
generating a second diagnostic signal on a second output channel of the redundant output channels;
monitoring the second output channel to detect the second diagnostic signal;
verifying proper operation of the brake control circuit when both the first and second diagnostic signals are detected at an input channel while the motor brake is released; and
verifying proper operation of the brake control circuit when neither the first nor second diagnostic signals are detected at the input channel while the motor brake is set.

15. The method of claim 14 further comprising the steps of:
controlling a first switch with the first output channel, and controlling a second switch with the second output channel; and/or
setting a brake command signal to release the motor brake when both the first switch and the second switch are in an ON state, wherein the brake command signal energizes a coil to release the motor brake, and monitoring the brake command signal at the controller, and/or
wherein the first and second diagnostic signals are present on the brake command signal, the step of monitoring the first output channel to detect the first diagnostic signal is done by monitoring the brake command signal at the controller, and the step of monitoring the second output channel to detect the second diagnostic signal is done by monitoring the brake command signal at the controller.
